## Europäisches Patentamt

(19) **European Patent Office**

**Office européen des brevets**

(11) Veröffentlichungsnummer: **0 164 066**
**B1**

(12) # EUROPÄISCHE PATENTSCHRIFT

(45) Veröffentlichungstag der Patentschrift:
20.07.88

(51) Int. Cl.⁴: **F 24 J 2/38, F 24 J 2/52**

(21) Anmeldenummer: **85106633.2**

(22) Anmeldetag: **30.05.85**

(54) Vorrichtung zum Nachführen von Sonnenkollektoren.

(30) Priorität: **08.06.84 DE 3421411**

(43) Veröffentlichungstag der Anmeldung:
**11.12.85 Patentblatt 85/50**

(45) Bekanntmachung des Hinweises auf die Patenterteilung:
**20.07.88 Patentblatt 88/29**

(84) Benannte Vertragsstaaten:
**CH DE FR GB IT LI SE**

(56) Entgegenhaltungen:
**EP-A-0 001 493**
**EP-A-0 059 690**
**DE-A-2 715 334**
**FR-A-900 470**
**FR-A-2 439 370**
**FR-A-2 450 427**
**FR-A-2 460 502**
**FR-A-2 501 344**
**GB-A-1 552 671**
**US-A-4 178 913**
**US-A-4 185 615**
**US-A-4 328 789**
**US-A-4 345 582**
**US-A-4 365 618**

(73) Patentinhaber: **Brandstätter, Rolf, Spesshardter Weg 22, D-7260 Calw (DE)**

(72) Erfinder: **Brandstätter, Rolf, Spesshardter Weg 22, D-7260 Calw (DE)**

(74) Vertreter: **Hubbuch, Helmut, Dipl.- Ing, Patentanwälte Dr. Rudolf Bauer Dipl.- Ing. Helmut Hubbuch Dipl.- Phys. Ulrich Twelmeier Westliche Karl- Friedrich- Strasse 29- 31, D-7530 Pforzheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zum Nachführen einer auf einem in einem Standrohr drehbaren Tragmast angeordneten Sonnenkollektorplatte. Eine derartige Vorrichtung ist aus des FR-A-2 450 427 bekannt.

Bei Solarkraftwerken sind Vorrichtungen bekannt, die die Kollektoren elektromotisch horizontal und vertikal nachführen. Die Elketromotoren werden dabei von Lichtsensoren gesteuert.

Sonnenkollektoren, die auf diese Weise der Sonne nachgeführt werden, liefern 40-45 % mehr Energie als standfeste, etwa auf nach Süden gerichteten Hausdächern angebrachte Kollektorplatten.

Solche elektrischen Einrichtungen sind aber störanfällig und teuer, insbesondere aber verbrauchen sie zum Nachführen einen Teil der gewonnenen Energie.

Die Erfindung liegt die Aufgabe zu Grunde, Kollektorplatte (Solarzellenbatterie) ohne Zuhilfenahme elektrischer Energie nachzuführen. Die Lösung dieser Aufgabe ist bei einer Vorrichtung der eingangs genannten Art dadurch erfüllt, daß das Standrohr eine mit Flüssigkeit gefüllte, volumenveränderliche Kammer und einen dem Deckel der Kammer aufstehenden Tragmast für die Sonnenkollektorplatte mit Abstand umschließt, wobei das Standrohr oder der Tragmast mit mindestens einer Wendelnut und der Tragmast bzw. das Standrohr mit mindestens einem in der Wendelnut geführten Bolzen versehen ist. Der auf dem Deckel der Kammer stehende Tragmast vermindert stetig das Volumen der Kammer durch sein Gewicht, wobei die aus der Kammer verdrängte Flüssigkeit durch eine Austrittsdüse in das Standrohr fließt und ein in dieses eingesetztes Gefäß füllt. Der Tragmast verschließt durch sein Gewicht ausserdem die Einlaßöffnung für die Flüssigkeit.

Während der Tragmast unter Volumenverminderung der Kammer im Standrohr absinkt, dreht er sich durch die Führung des Bolzens in der Wendelnut.

Die Wendelnut erstreckt sich zweckmäßig über einen Winkel von 180° am Umfang des Standrohres. Ganghöhe der Wendelnut, Durchmesser der Austrittsöffnung, Viskosität der Flüssigkeit, Gewicht des Tragmastes und Federkraft der Kammer sind so abzugleichen, daß sich der Tragmast in etwa 12 Stunden um 180° dreht. Wenn das Standrohr so gestellt wird, daß das untere Ende der Wendelnut nach Osten weist, so folgt die auf dem Tragmast um eine waagerechte Achse schwenkbar montierte Kollektorplatte der scheinbaren Bahn der Sonne am Himmel im Verlauf eines Tages.

Messungen haben ergeben, dass die Kollektorplatte nicht punktgenau, wie etwa ein astronomisches Fernrohr, der Sonne nachgeführt werden muss, um die bei sensorischer Nachführung erzielten Energiegewinne zu erhalten. Zur Anpassung an die Sonnenhöhe genügt bei der Vorrichtung der Erfindung sogar eine Nachstellung der Plattenneigung von Hand wenige Male im Jahr.

Der Tragmast der Vorrichtung der Erfindung erreicht seinen unteren Endpunkt am Abend. Soll er seinen Wendelweg später von neuem durchlaufen, so muß er von Hand auf den gegenwärtigen Sonnenstand zurückgestellt werden. Hierzu dient ein am Tragmast befestigter Handgriff. Wird der Tragmast mit dem Handgriff angehoben, so gibt er die Einlaßöffnung für die im Standgefäß befindliche Flüssigkeit frei und diese füllt wieder die sich durch ihre Federkraft ausdehnende Kammer. Die Kammer besteht mit Vorteil aus einem Faltenbalg mit integrierter Druckfeder. Es kann aber beispielsweise auch ein in einem Zylinder beweglicher Kolben verwendet werden.

Damit die Kollektorplatte wenigstens konstant nach Süden gerichtet ist, wenn vergessen wurde, die Vorrichtung in Betrieb zu setzen schließt sich am unteren Ende der sich über einen Winkel von 180° erstreckenden Wendelnut eine in entgegengesetzter Wendelung sich über einen Winkel von 90° erstreckende zweite Wendelnut an. Hierdurch wird der am Ende seiner Ost-West-Drehung weiter absinkende Tragmast zurückgedreht und bleibt mit nach Süden gerichteter Kollektorplatte stehen.

Die Befestigungsschelle des Handgriffs am Tragmast ist mit einer Muffe versehen, die die Wendelnut im Standrohr abdeckt.

Bei großen, insbesondere auch mobilen, Ausführungen der Vorrichtung der Erfindung ist ein Heben des Tragmastes von Hand wegen seines Gewichts oft nicht möglich.

Gemäß einem weiteren Gedanken der Erfindung kann der Tragmast hydraulisch gehoben werden. Hierzu wird die Flüssigkeit mit einer Handpumpe aus einem Vorratsbehälter über Ventile in die - nicht mehr mit einer Druckfeder ausgerüstete - Kammer gepumpt, die dann den Tragmast unter Drehung hebt. Vermindert das Gewicht des Tragmastes das Volumen der Kammer, so fließt die Flüssigkeit über ein Drosselventil zurück in den Vorratsbehälter. Die Dauer des Absinkens kann leicht und genau durch die Drossel eingestellt werden.

Die Zeichnung zeigt schematisch und teilweise im Schnitt zwei bevorzugte Ausführungsbeispiele einer Vorrichtung zum Nachführen von Sonnenkollektoren.

In der Zeichnung ist:

Figur 1: eine perspektivische Darstellung der einen Ausführungsform,

Figur 2: ein Längsschnitt nach Linie II-II der Figur 1,

Figur 3: der untere Teil des Längsschnitts nach Figur 2 mit Einzelheiten,

Figur 4: eine Darstellung der zweiten Ausführungsform mit hydraulischer Hebung des Tragmastes und

Figur 5: die hydraulische Schaltungsanordnung der Ausführungsform nach Figur 4.

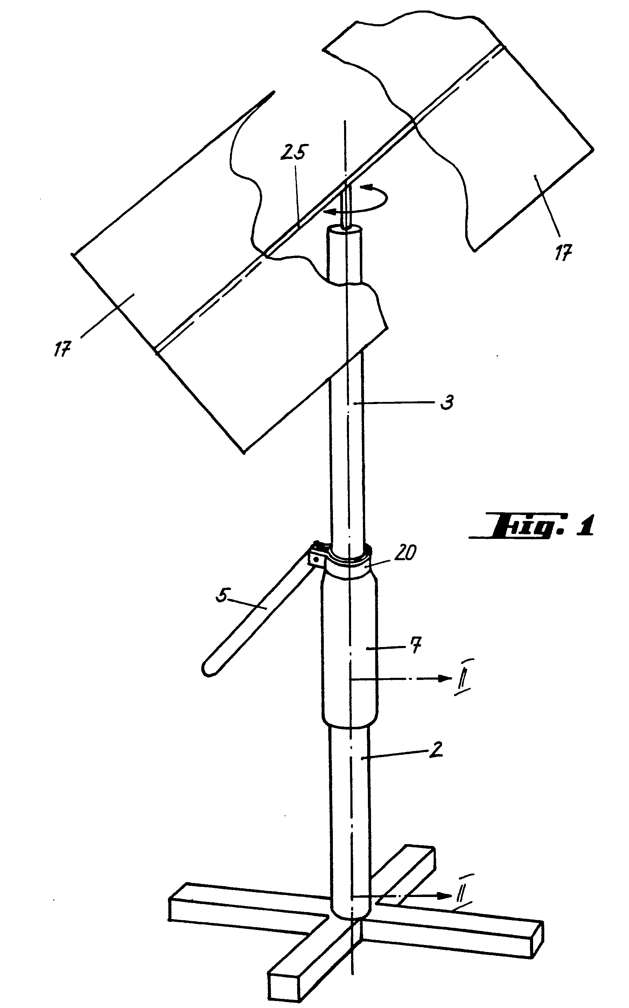

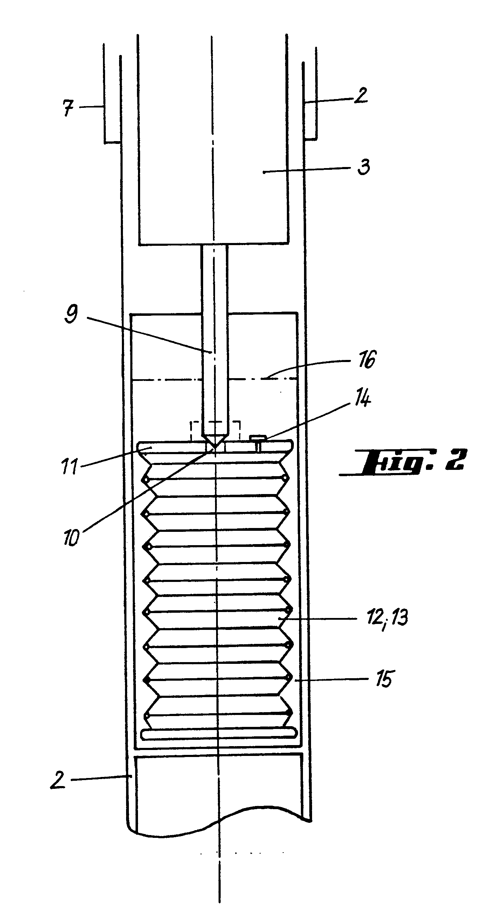

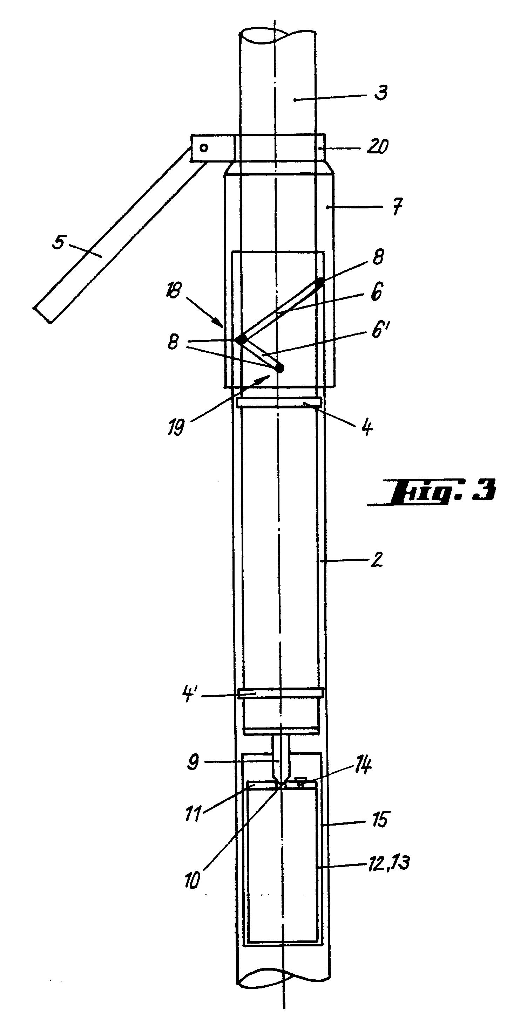

In dieser Zeichnung ist das Standrohr mit 2 und der Tragmast mit 3 bezeichnet. Letzterer (3) trägt die Kollektorplatte 17, die von Hand um eine horizontale Achse 25 schwenkbar ist. 4 und 4' sind Abstandhalter zwischen Standrohr 2 und Tragmast 3. Im unteren Teil des Standrohres 2 befindet sich bei der Ausführungsform nach Figur 1 bis 3 ein Vorratsbehälter 15, in dem der die Kammer 12 bildende Faltenbalg mit integrierter Druckfeder 13 steht. Der Behälter 15 ist bis etwa zur Linie 16 mit Flüssigkeit gefüllt.

Der Faltenbalg hat einen Deckel 11 mit einer Eintrittsöffnung 10 und einer Austrittsdüse 14.

Der Tragmast 3 verschließt mit dem Stössel 9 die Eintrittsöffnung 10, wenn er durch sein Gewicht den Faltenbalg zusammendrückt. Hierbei wird die im Faltenbalg befindliche Flüssigkeit verdrängt und läuft durch die Düse 14 in den Behälter 15.

Aus dem Tragmast 3 steht radial ein Bolzen 8 heraus, der von der Wendelnut 6 im Standrohrmantel geführt wird. Zu Beginn der Bewegung (am Morgen) steht der Bolzen 8 in der gezeichneten Stellung. Sinkt der Tragmast 3 ab, so dreht er sich zugleich um 180° von von Ost nach West, weil der Bolzen 8 in der Wendelnut 6 gleitet. Am Abend steht der Bolzen 8 in der Stellung 18 und tritt dort in die umgekehrt gewendelte Wendelnut 6' ein. Beim weiteren Absinken des Tragmastes 3 dreht sich dieser in umgekehrter Richtung um 90° und bleibt stehen, sobald der Bolzen 8 in der Nut 6' die Stellung 19 erreicht hat. Dann ist die Kollektorplatte 17 nach Süden gerichtet.

Mit dem Handgriff 5 kann man den Tragmast 3 in jede beliebige Stellung bringen. An der Befestigungsschelle 20 sitzt eine Muffe 7, welche die Wendelnut 6 und 6' überdeckt.

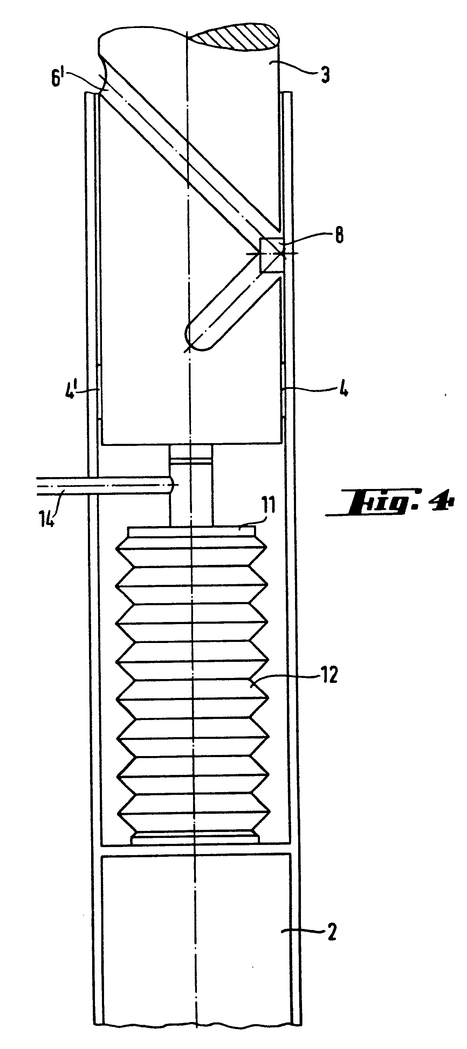

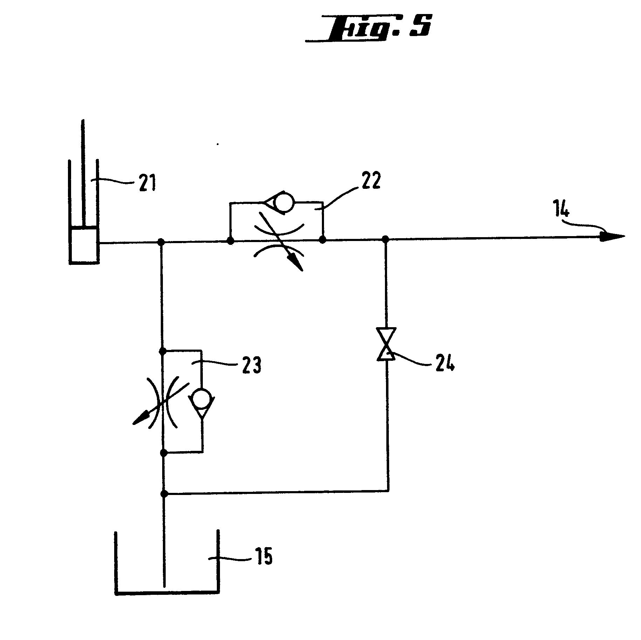

Bei der Ausführungsform nach Figur 4 und 5 fehlt der Handgriff 5 mit Schelle 20 und die Druckfeder 13.

Der Vorratsbehälter 15 ist außerhalb des Standrohres 2 angeordnet. Bei dieser Ausführungsform wird die Flüssigkeit mittels einer Handpumpe 21 und der Ventile 22 und 23 aus dem Vorratsbehälter 15 in die Faltenbalgkammer 12 gepumpt und dadurch der Tragmast 3 (unter Drehung) gehoben. Soll der Tragmast 3 (unter Rückdrehung) sinken, so wird das Drosselventil 24 geöffnet und die Flüssigkeit fließt aus der Kammer 12 in den Vorratsbehälter 15 zurück.

Bei einer anderen Ausführungsform sind die Ventile 22 und 23 kombinierte Drossel- und Rückschlagventile. Durch das Ventil 23 wird die Flüssigkeit in die Pumpe 21 gesaugt, durch das Ventil 22 wieder in die Kammer 12 gedrückt. Die Ventile 22 und 23 wirken der Tragmastbewegung als Drosselventile und bei Betätigung der Pumpe 21 als Rückschlagventile. Bei Betätigung des Ventils 24 entleert sich die Kammer 12 schnell und der Tragmast 3 wird entsprechend schnell eingezogen.

**Patentansprüche**

1. Vorrichtung zum Nachführen einer auf einem in einem Standrohr drehbarem Tragmast angeordneten Sonnenkollektorplatte, dadurch gekennzeichnet, daß das Standrohr (2) eine mit Flüssigkeit gefüllte, volumenveränderliche Kammer (12) auf deren (12) Deckel (11) der Tragmast (3) für die Sonnenkollektorplatte (17) steht, mit Abstand umschließt, wobei das Standrohr (2) oder der Tragmast (3) mit mindestens einer Wendelnut (6) und wechselweise der Tragmast (3) oder das Standrohr (2) mit mindestens einem in der Wendelnut (6) geführten Bolzen (8) versehen ist und der Tragmast (3) durch sein Gewicht das Volumen der Kammer (12) durch Absinken vermindert und die dadurch aus der Kammer (12) verdrängte Flüssigkeit über ein Drosselventil (24) oder eine Austrittsdüse (14) in ein Vorratsgefäß (15) drückt.

2. Vorrichtung nach Anspruch 1, dadurch gekennzeichnet, daß die Austrittsdüse (14) und eine Eintrittsöffnung (10) im Deckel (11) der Kammer (12) angeordnet sind und am Tragmast ein Stössel (9) vorgesehen ist, der die Eintrittsöffnung (10) für die Flüssigkeit in der Kammer (12) verschließt.

3. Vorrichtung nach Anspruch 1 oder 2, dadurch gekennzeichnet, dass die Kammer (12) durch einen Faltenbalg mit integrierter Druckfeder gebildet ist.

4. Vorrichtung nach einem der vorhergehenden Ansprüche, dadurch gekennzeichnet, daß sich die Wendelnut (6) über einen Winkel von 180° am Umfang des Standrohres (2) bzw. Tragmastes (3) erstreckt.

5. Vorrichtung nach Anspruch 4, dadurch gekennzeichnet, daß die Wendelnut (6) an ihrem unteren Ende in eine zweite Wendelnut (6') mit entgegengesetzter Wendelung übergeht, die sich über einen Winkel von 90° am Umfang des Standrohres (2) bzw. Tragmastes (3) erstreckt.

6. Vorrichtung nach einem der vorstehenden Ansprüche, dadurch gekennzeichnet, daß am Tragmast (3) ein Handgriff (5) befestigt ist.

7. Vorrichtung nach Anspruch 6 mit Wendelnuten im Standrohr, dadurch gekennzeichnet, daß die Befestigungsschelle (20) des Handgriffs (5) mit einer die Wendelnuten (6, 6') im Standrohr (6) überdeckende Muffe (7) verbunden ist.

8. Vorrichtung nach Anspruch 1, 4 oder 5, gekennzeichnet durch eine Handpumpe (21) mit der die Flüssigkeit aus einem Vorratsbehälter (15) über Ventile (22, 23) in die Kammer (12) pumpbar ist, aus der (12) sie über das Drosselventil (24) in den Vorratsbehälter (15) zurückfließt.

9. Vorrichtung nach Anspruch 1, 4 oder 5, gekennzeichnet durch eine Handpumpe (21) und zwei kombinierte Drossel-Rückschlagventile (22, 23), die bei der Tragmast (3)-Bewegung als Drosselventile und bei Pumpen (21)-Betätigung als Rückschlagventile wirken.

10. Vorrichtung nach Anspruch 9, gekennzeichnet durch ein Überbrückungsventil (24) durch dessen Betätigung die Kammer (12) sofort entleerbar ist.

## Revendications

1. Dispositif d'orientation d'un panneau de collecteur solaire monté sur un mât porteur tournant dans un tube vertical, caractérisé en ce que le tube vertical (2) entoure à distance une chambre à volume variable (12) remplie de liquide sur le couvercle (11) de laquelle (12) repose le mât porteur (3) pour le panneau de collecteur solaire (17), le tube vertical (2) ou le mât porteur (3) comportant au moins une rainure hélicoïdale (6) et le mât porteur (3) ou le tube vertical (2) présentant alternativement au moins un axe (8) guidé dans la rainure hélicoïdale (6), et que le mât porteur (3) réduit, en descendant sous l'effet de son poids, le volume de la chambre (12), ce qui provoque ainsi, par l'intermédiaire d'une soupape d'étranglement (24) ou d'une buse de sortie (14), le transfert du liquide déplacé dans la chambre (12) vers un réservoir (15).

2. Dispositif selon la revendication 1, caractérisé en ce que la buse de sortie (14) et l'orifice d'entrée (10) sont situés dans le couvercle (11) de la chambre (12) et que le mât porteur est muni d'un poussoir (9) qui obture l'orifice d'entrée (10) pour le liquide contenu dans la chambre (12).

3. Dispositif selon l'une des revendications 1 ou 2, caractérisé en ce que la chambre (12) est constituée par un soufflet à ressort de pression intégré.

4. Dispositif selon l'une quelconque des revendications 1 à 3, caractérisé en ce que la rainure hélicoïdale (6) s'étend sur un angle de 180° sur la circonférence du tube vertical (2) et respectivement du mât porteur (3).

5. Dispositif selon la revendication 4, caractérisé en ce que la rainure hélicoïdale (6) se transforme, à son extrémité inférieure, en une deuxième rainure hélicoïdale (6') avec hélice tournant en sens inverse, laquelle s'étend sur un angle de 90° sur la circonférence du tube vertical (2) et respectivement du mât porteur (3).

6. Dispositif selon l'une quelconque des revendications 1 à 5, caractérisé en ce qu'une poignée (5) est fixée sur le mât porteur (3).

7. Dispositif selon la revendication 6, caractérisé en ce que le collier de fixation (20) de la poignée (5) est raccordé à un manchon (7) qui recouvre les rainures hélicoïdales (6, 6') dans le tube vertical (2).

8. Dispositif selon l'une quelconque des revendications 1, 4 ou 5, caractérisé en ce qu'une pompe à main (21) permet de pomper le liquide à partir d'un réservoir (15) et par l'intermédiaire de soupapes (22, 23) dans la chambre (12) d'où il retourne dans le réservoir (15) en passant par la soupape d'étranglement (24).

9. Dispositif selon l'une quelconque des revendications 1, 4 ou 5, caractérisé en ce qu'il comprend une pompe à main (21) et deux clapets anti-retour avec étranglement combinés (22, 23) qui agissent comme soupapes d'étranglement lors du mouvement du mât porteur (3) et comme clapets anti-retour lors de l'actionnement de la pompe (21).

10. Dispositif selon la revendication 9, caractérisé en ce qu'il comprend une soupape de pontage (24) dont l'actionnement permet l'évacuation immédiate de la chambre (12).

## Claims

1. Device for guiding a solar collector plate on a supporting mast rotatable in an upright pipe, characterised in that the upright pipe (2) surrounds, at a distance, a fluid-filled chamber (12) of variable volume, on the cover (11) of which (12) stands the supporting mast (3) for the solar collector plate (17), the upright pipe (2) or the supporting mast (3) being provided with at least one spiral groove (6) and alternately the support mast (3) or the upright pipe (2) having at least one bolt (8) guided in the spiral groove (6), and the support mast (3) reducing the volume of the chamber (12) trough its weight by sinking and thereby forcing the fluid displaced from the chamber (12) via a throttle valve (24) or outlet nozzle (14) into a storage container (15).

2. Device according to claim 1, caracterised in that the outlet nozzle (14) and the admission opening (10) are arranged in the cover (11) of chamber (12), with a tappet (9) being provided on the supporting mast which clossed the inlet opening (10) for the fluid in chamber (12).

3. Device according to claim 1 or 2, characterised in that the chamber (12) is formed by a bellows with an integrated pressure spring.

4. Device according to one of the above claims, characterised in that spiral groove (6) extends over an angle of 180 degrees at the circumference of the upright pipe (2) or support mast (3).

5. Device according to claim 4 characterised in that the spiral groove becomes at its lower end a second spiral groove (6') with an opposing spiral, which extends over an angle of 90 degrees at the circumference of the upright pipe (2) or support mast (3).

6. Device according to one of the above claims characterised in that a hand grip (5) is attached to the support mast (3).

7. Device according to claim 6 with spiral grooves in the upright pipe characterised in that the fastening clip (20) of the hand grip (5) is connected to a sleeve (7) covering the spiral grooves (6, 6') in the upright pipe.

8. Device according to claims 1, 4 and 5 characterised by a hand pump (21) with which the fluid can be pumped from the storage container (15) via valves (22, 23) into the chamber (12), from which (12) it flows back into the storage container via the throttle valve (24).

9. Device according to claims 1, 4 and 5 characterised by a hand pump (21) and two combined throttle return valves (22, 23) which operate as throttle valves during support mast (3) movement and as return valves during pump (21) operation.

10. Device according to claim 9 characterised by a bridging valve (24) which when operated immediately empties the chamber (12).

0 164 066

**Fig. 1**

Fig. 2

**Fig. 3**

**Fig. 4**

Fig. 5